# EUROPEAN PATENT SPECIFICATION

(11) **EP 0 511 009 B1**
(45) Date of publication and mention of the grant of the patent: **11.09.1996**
(21) Application number: 92303726.1
(22) Date of filing: 24.04.1992
(51) Int. Cl.: B09B 1/00, B63B 35/00, B65D 88/78

(54) **Apparatus and method for transferring material to subaqueous levels**
Verfahren und Vorrichtung zum Verklappen von Materialien
Procédé et dispositif pour le déversement de matières sur des fonds marins

(30) Priority: 25.04.1991 GB 9108922
(43) Date of publication of application: 28.10.1992
(73) Proprietor: Copson, Alex George, Washington D.C. 20007 (US); Kongsli, Christian, N-0121 Oslo 1 (NO)
(72) Inventor: Copson, Alex George, Washington D.C. 20007 (US)
(74) Representative: Abrams, Michael John

(56) References cited:
- EP-A- 0 380 301
- DE-A- 3 224 331
- GB-A- 2 206 543
- GB-A- 2 229 145

## Description

This invention relates to apparatus and a method for transferring material from the surface of a body of water to subaqueous depths, and in particular to deep sea bed locations.

The disposal of waste material is a major problem and is one which is increasing at an alarming rate. In many instances, waste materials are disposed of in the sea. Some materials are simply dumped from ships or pumped into the water. Such surface dumping leads to widespread pollution of the surface waters due to dispersal of waste matter as it sinks towards the sea bed. This can have a deleterious affect on the marine environment over a wide area.

In order to avoid or substantially reduce the risk of wide spread pollution during the disposal of large quantities of waste material in the sea, it is desirable to deposit the waste on or close to the sea bed either at deep water sites (for example 4000-5000m depth) which have little or no marine life and negligible local currents, or in shallow water sites where a regime known as "subaqueous capping" is operated to localise the deleterious effects of dumping waste in such waters. Under this regime, waste with a high contaminant content ("dirty waste") is first dumped from a ship at a chosen shallow water site, and then waste with a relatively low contaminant content ("clean waste") is dumped over the top. This tends to cover the dirty waste with clean waste, thereby "capping" the dump site. Such a procedure is disclosed in our previous European Patent Publication No. 0 511 009, which procedure involves positioning a ship carrying waste material above a selected site, and transferring this material to subaqueous ground via a tube or a bucket.

However, particularly when waste material is to be deposited at deep water sites, the transfer of the waste material to its intended disposal location presents a number of difficulties. For economic operation, it is desirable to transfer the maximum quantity of material to the disposal site in the minimum space of time. For deep water sites, continuous disposal through, for example, a pipeline connected to a waste storage facility on board a vessel is not practicable.

It is known from GB-A-2 229 145 to transport toxic waste to subaqueous ground by means of containers provided with flaps and fins which containers are dropped from a ship. These containers, however, are not reusable, and are inefficient because the flaps and fins are arranged to provide a slow descent in order to avoid damage to the container. Furthermore, the flaps and fins are fixed and may not be adjusted or controlled during the descent of the container.

An object of the present invention is to provide apparatus and a method for transporting material from the surface of a body of water to a subaqueous level (typically the sea bed) in an efficient manner.

According to one aspect of the present invention, there is provided a method of disposal of waste material on subaqueous ground substantially without said material coming into contact with the surrounding water, which comprises transporting said material to a location above a selected site for disposal, conveying said material in a vessel to a level at, or close to, said subaqueous ground, and depositing said material from said vessel onto said subaqueous ground, characterised in that said vessel travels under free-fall conditions for a first period, and thereafter is decelerated during a second period as it approaches said level.

The process of waste disposal preferably takes place from a ship which may be held stationary over a selected subaqueous site by means of a dynamic positioning system comprising thrusters and satellite navigational aids. The ship advantageously has sensors (such as sonar transponders) mounted beneath the hull which allow monitoring of the sea bed and monitoring of any objects beneath the ship.

Preferably, the duration of the first and second periods is calculated as a function of depth. The calculation of these two periods may be performed prior to, or during, the descent of the vessel. The vessel is preferably provided with water jets affixed so as to point in a downward direction. These water jets may be used to form a hollow in the sea bed into which the waste material may be deposited. To aid deposition of the material, the vessel is advantageously provided with vent apertures equipped with non-return valves, which, in use, permit water to enter the vessel, displacing the material which is being deposited, but which prevent egress of the material. These apertures are open when the waste material is deposited in order to equalise the hydrostatic pressures inside and outside the vessel and thus to increase the rate of deposition of said material. These vent apertures are preferably left open as the vessel is drawn back up to the surface of the water so as to minimise water resistance.

According to a second aspect of the present invention, there is provided a vessel for transporting a material from a first location at the surface of a body of water to a second location at a predetermined subaqueous level, for example at the sea bed, which vessel comprises a generally cylindrical body comprising a containment area and having an opening at its Upper end for receiving material which is to be transported by the vessel, and having at its lower end means for permitting egress of material held within the containment area once said vessel has reached its predetermined second location; characterised in that the vessel is provided, at a position intermediate its upper end and its centre of mass, with at least two wing-like members located on the exterior surface of the vessel at diametrally opposed positions; and is provided with means for pivoting said wing-like members between a first position in which they lie substantially flat against the exterior of the vessel and a second position in which they extend outwardly from the body of the vessel so as to present an increased surface area to the surrounding water and to provide thereby a decelerating effect on the motion of the vessel when the vessel is moving downwardly within the body of water.

Preferably, the wing-like members are attached to the body of the vessel relatively close to the upper end thereof, for example at a position spaced from the upper end of the vessel by an amount equal to a value in the range from one tenth to one third of the axial length of the vessel. It is also preferred for the wing-like members to pivot upwardly and outwardly when moving from their first position to their second position. This arrangement maintains better stability during the descent of the vessel both during its normal descent velocity phase and when it is subject to the decelerating effect of the wing-like members.

In one embodiment, the body of the vessel itself, or the outer surface of the wing-like members, are provided with baffles which serve to modify the "free fall" velocity of the vessel as it descends from the surface of the body of water. These baffles may be fixed in orientation, or they may be under active control to permit them to move from a "feathered" arrangement, in which they present minimal area against the water, to an open position in which they present maximal area to the water.

Advantageously, there are two or more pairs of opposed wing-like members located at the same axial level on the vessel.

The wing-like members may be generally planar or they may be curved to correspond to the curvature of the exterior of the vessel body. Additionally, in some embodiments, the or each of the wing-like members may terminate in a short flange which can, for example, extend obliquely away from the body of the vessel when the wing-like members are in their closed (i.e. streamlined) position.

The opening or openings in the upper section of the vessel preferably include one-way vents which permit material to enter the vessel while preventing any upward movement of material from inside the vessel. These vents permit hydrostatic equalisation during descent of the vessel from its sea surface location to the position at which its contents are to be evacuated.

The lower end of the vessel is preferably formed to include doors which hinge outwardly to permit egress of material from within the vessel. The vessel preferably carries a control pack which allows remote or automatic operation of the doors. As the material exits via the open doors at the base of the vessel, the one-way vents at the upper end of the vessel may be used to allow water to enter the vessel, maintaining hydrostatic equalisation during the emptying operation. The containment body preferably has its internal surface provided with a non-stick coating.

During disposal the ship may be held on station at the disposal site by means of satellite navigational aids and thrusters and also by means of sensors comprising sonar transponders.

Preferably the material is subjected to processing prior to its transfer into the vessel, but may be subjected to processing either during the step of conveying the material to the subaqueous ground or while it is in the vessel before being conveyed to the subaqueous ground. This treatment is preferably a chemical treatment which may comprise flocculation and/or coagulation. The chemical reagents or additives may be injected into the material through one or more nozzles and may be mixed into the material by an homogenising grating. The material may comprise dredged spoils, contaminated soil, flyash, slurry or sewerage.

For a better understanding of the invention, and to show how the same may be put into effect, reference will now be made, by way of example, to the accompanying drawings, in which:
Figures 1(a) and 1(b) are schematic sections of a first embodiment of a ship for disposal of waste in accordance with the invention;
Figure 2 illustrates schematically a section through a container for waste disposal;
Figures 3(a) to (d) illustrate a sequence using the container for waste disposal;
Figures 4(a) to (d) show in detail part of the sequence for waste disposal using the container.
Figure 5 is a schematic view of one embodiment of a vessel in accordance with this invention;
Figures 6a and 6b are plan views from above of the vessel of Fig. 5 in two different configurations;
Figure 6c is a plan view from below of the vessel of Fig. 5;
Figures 6d and 6e are, respectively, sectional views along the lines A-A and B-B of Figure 5;
Figure 7 illustrates schematically a marine system for waste disposal; and
Figures 8-10 illustrate schematically the use of a vessel such as shown in Figures 5 and 6.

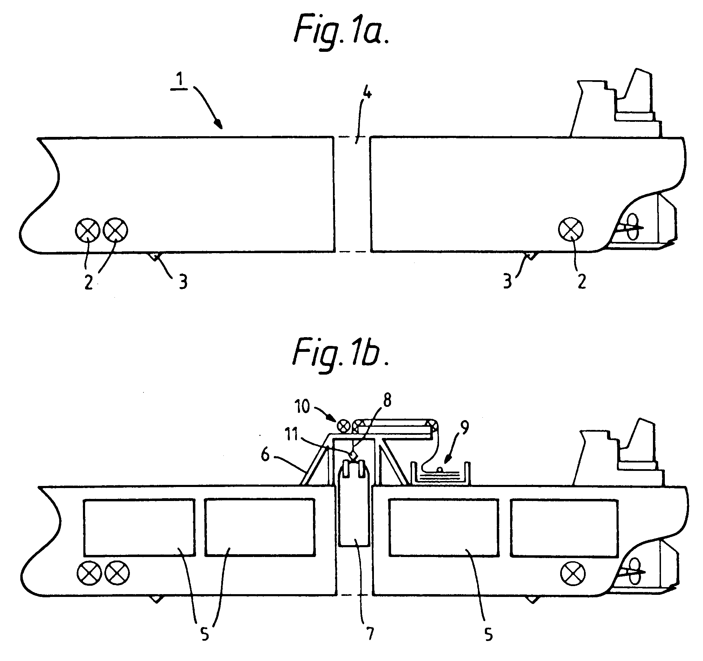

Referring now to Figure 1(a), a suitable waste disposal vessel would, for example, be a sea going ship 1 of about 40,000 tonnes displacement. The ship has a dynamic positioning system using thrusters 2 to allow it to hold station over a selected seabed site during disposal operations. The ship also has sensors 3 (such as sonar transponders) mounted beneath the hull which allow monitoring of the seabed and monitoring of any objects beneath the ship. There is a hole or moon pool 4 formed through the hull of the ship and opening into the sea beneath the ship; this moon-pool 4 allows passage of a container or vehicle for waste material through the body of the ship and into the sea below.

As shown in Figure 1(b) according to a first embodiment of the invention the ship has storage tanks 5 for carrying waste material. On the deck there is an A-frame gantry 6 which straddles the moon-pool. A container 7 is supported by a tether 8. The tether is a cable, chain or rope (e.g. "Kevlar" (trade mark)). If the tether is a cable, it may be wound on a reel (not shown). Preferably, the tether is a rope, and in this case the rope can be coiled in a rope store 9. The rope passes via a traction unit 10 to be attached to the container at an attachment swivel 11. The tether is sufficiently long to allow lowering of the container to the seabed; the container can be winched back to the ship from the seabed by means of the tether and the traction unit. The tether has a design strength sufficient to support the weight of a container and its contents (e.g. a breaking strain of several thousand tonnes) and should be designed to be capable of withstanding considerable stretching forces.

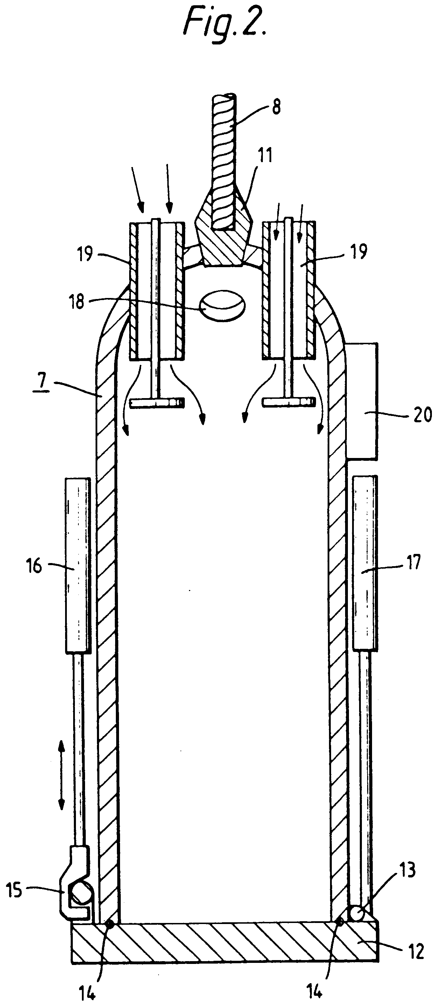

The container 7 shown in Figure 2 has a casing of generally closed cylindrical shape and which defines a space for containing waste materials. The container is designed to be hung from the tether 8 by means of the attachment swivel 11. The base or bottom end of the container, opposite the swivel attachment, is closable by a door 12 mounted on a hinge 13. Seals 14 are provided between the casing ends and the door. A lock mechanism 15 is provided to releasably engage part of the door and there is a ram 16 connected to the lock mechanism to lock or unlock the sealing of the door. A second ram 17 is attached to the door in the vicinity of the hinge and is used to close the door.

A loading port 18 is provided in the upper part of the casing by means of which waste material may be loaded into the container. The loading port can be sealed after the container is loaded.

Also in the upper part of the container are mounted vent apertures fitted with non-return valves 19. The non-return valves provide passages for access into the interior of the container but prevent the exit of material from the container through the vents.

The container of this example is fabricated from steel, has a mass of about 120 tonnes and an internal capacity of about 2500m³. This container could, for example, hold about 4000 tonnes of solid waste such as contaminated soil, dredged spoil, flyash and the like. Alternatively, the container could hold liquid wastes or slurries (e.g. sewerage sludge of about 5% solids by weight).

A method of waste disposal using the container will now be described by way of example, with reference to the use of a container of the type illustrated by Figure 2.

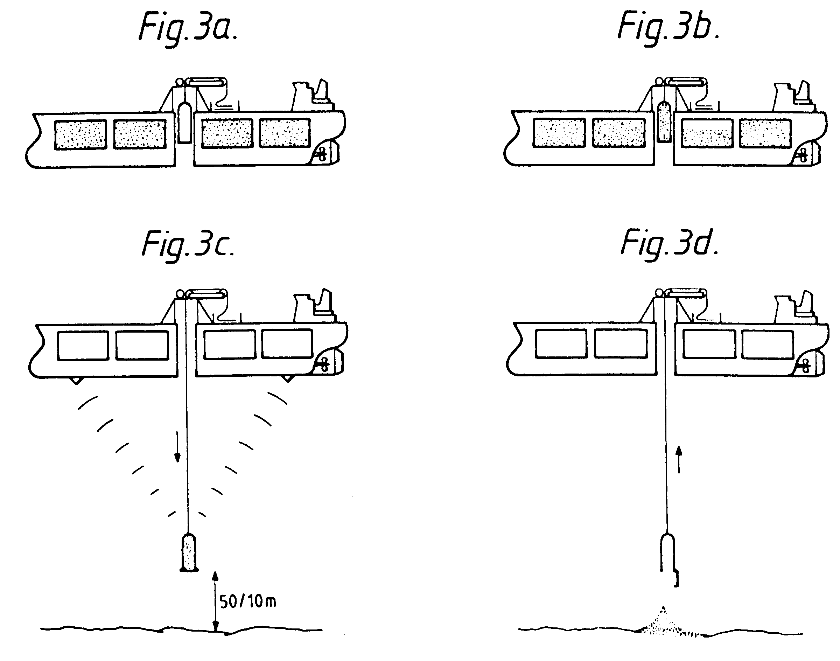

Referring to Figure 3, a general sequence of operation will be described. The ship is loaded with waste material and is taken to a deep water site suitable for waste disposal, Fig. 3(a). Waste material is then loaded into the container whilst the container is held within the moon-pool of the ship, Fig.3 (b). The filled container is sealed and is then lowered towards the seabed on the tether. The ship is maintained in position by the dynamic positioning system. The position of the container relative to the ship and relative to the seabed is monitored during deployment of the container, Fig. 3(c).

As the container nears the seabed its descent is slowed so that the descent is arrested before it reaches the seabed. The container should stop about 10-50m above the seabed.

The container carries a control pack (Figure 2, numeral 20) which allows remote operation of the ram 16 to unlock the door of the container. As the door drops open under the weight of the contained waste, the waste material drops down to be deposited onto the seabed. The load on the tether is thereby reduced and any stretching of the tether will be reduced tending to allow the container to rise somewhat towards the surface. The tether is winched in to complete the retrieval of the container into the ships moon-pool, Fig. 3(d).

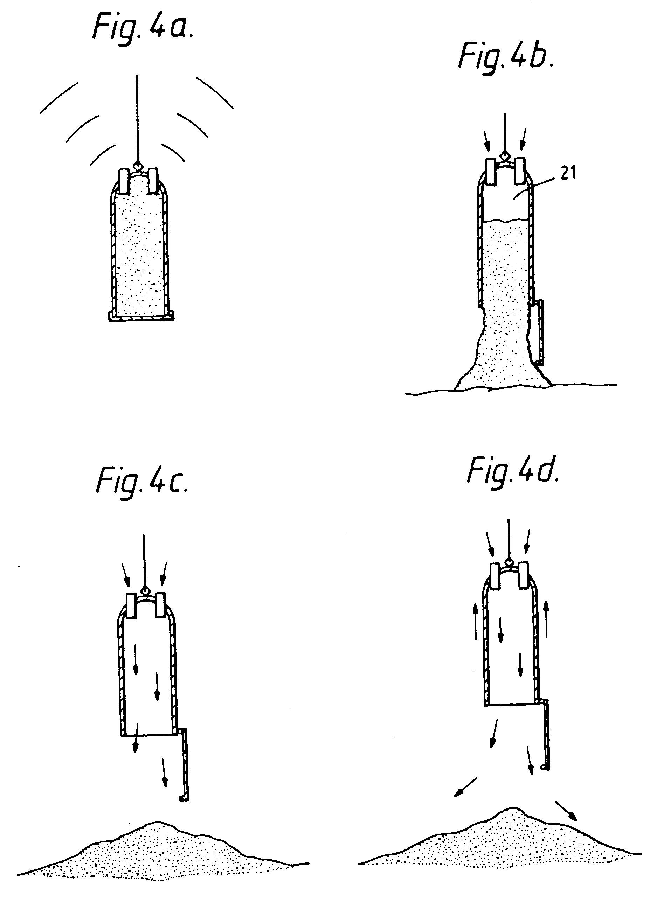

Figure 4 shows in more detail some features of the sequence for waste disposal according to this embodiment of the invention. When the descent of the container is arrested just above the seabed, remote signalling can be used to check that the disposal system is ready for operation, Fig. 4(a). As shown in Figure 4(b), as the door is released the contained material drops as a mass to the seabed under the influence of gravity. In order that the release of the waste material is not held back by the creation of a vacuum in the upper part of the container 21, the one way valves open as the waste drops. The cavity formed behind the waste material is flooded with sea water which replaces the expelled material.

As the sea water rushes into the container it tends to flush the waste material out through the open door, Fig. 4(c). As shown in Figure 4(d), further flushing of the inside of the container occurs by the passage of seawater through the vents via the one way valves as the container is raised towards the surface with the door remaining open. Any traces of waste material will tend to be washed out of the container before the container gets near to the water surface.

By using this form of the invention it is possible to deposit a large mass of waste material directly onto the seabed at great depth without risk of polluting the sea water through which the material has had to pass on its journey from the surface to the seabed.

Various additional features may be included within the scope of this embodiment of the invention. For example, the inside surface of the container may be polished or treated with "non-stick" material in order to assist the smooth expulsion of the waste from the container at the seabed. Furthermore, the waste may have added to it various treating agents, e.g. chemical additives such as flocculants and/or stabilizers. The treating agents may be added to the waste material as it is loaded into the container, but alternatively there could be inlet ports in the casing of the container for introducing treating agents directly into the material. In some cases it is envisaged that the container will be filled to maximum capacity with waste material, and in other cases the container might be part-filled with sea water and the waste material then added thereto.

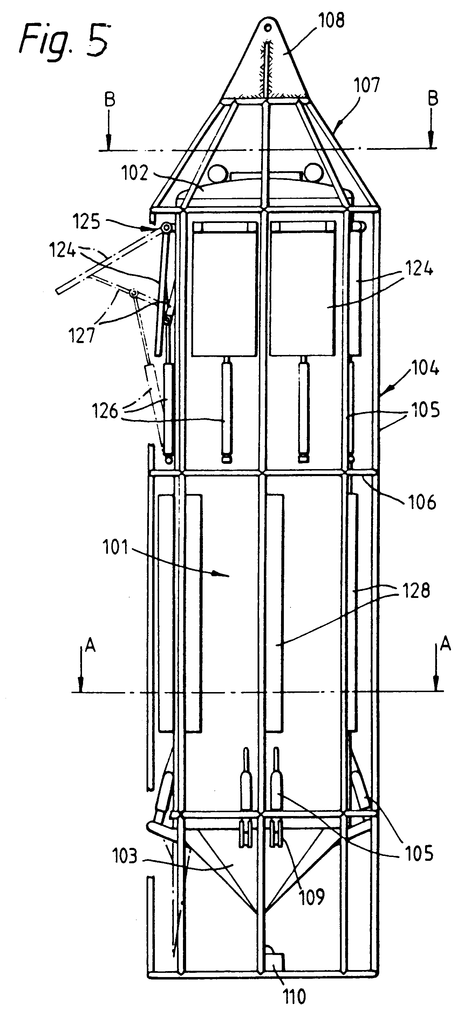

Referring now to Figure 5, the vessel comprises a main containment body 101 having a domed upper surface 102 and a somewhat conical lower end 103 which incorporates "clamshell" doors. The generally cylindrical body 101 is surrounded by an open framework 104 of struts which include vertical members 105 and horizontal members 106. The struts are preferably in the form of metal tubes or pipes coated with ultra high molecular weight polyethylene.

In the vicinity of upper surface 102 of containment body 101, the struts 105 adopt a generally conical configuration as at 107 and terminate in a lifting/lowering sling 108.

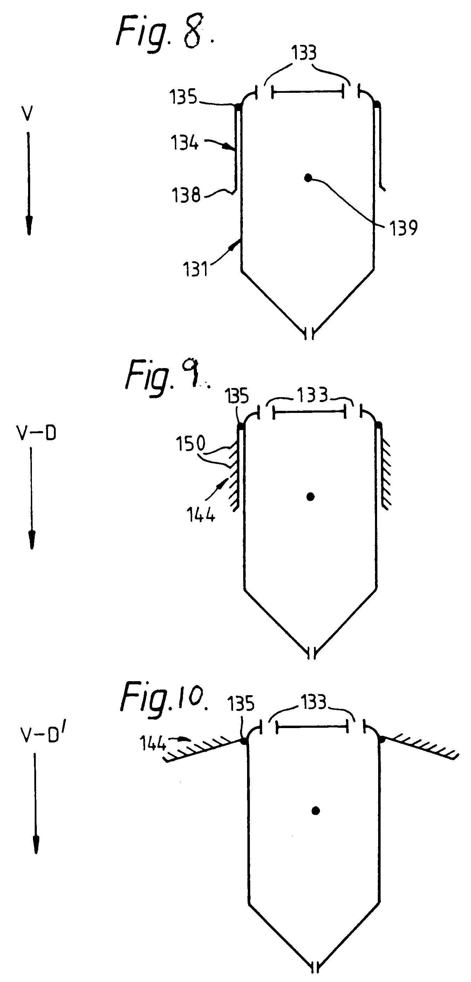

The vessel also carries eight wing-like members 124a -124h one of which is shown in its opened configuration in Figure 10. Each of the wings 124 is attached to the side of the vessel by means of a hinged mechanism such as 125. Each of the wings 124 is operated by a hydraulic ram 126 which is linked to its respective wing 124 by an arm 127. The hydraulic rams 126 are mounted just above the mid-point of the vessel. With this arrangement, wings 124 are located close to the top of the vessel and well above its centre of mass.

At the lower end of the containment device, struts 105 carry water jets 109. An altitude sonar 110 is also provided at the lower end of the vessel.

Stored energy accumulators 128 are carried by the framework 104 in a region below the top surface 102 of containment body 101.

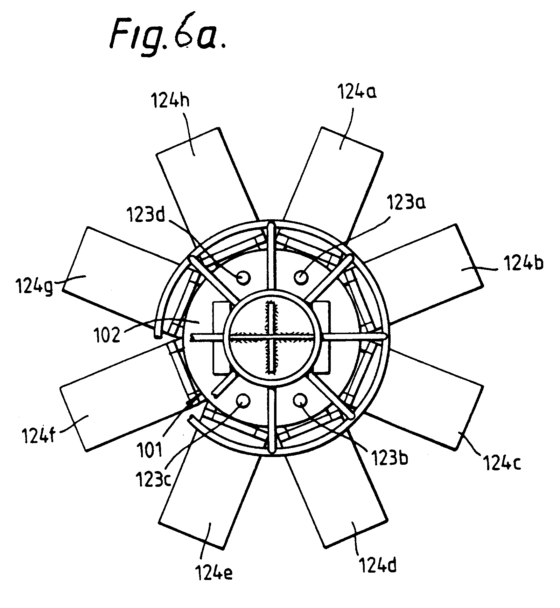

Referring now to Figure 6a, the top of the vessel is shown in schematic plan view with all of the wings 124a - 124h in their opened configuration. The upper surface 102 of containment body 101 includes four one-way vents 123a - 123d which permit flow into the vessel but prevent flow from within to without.

Figure 6b is a plan view corresponding to that of Figure 6a, but with the wing-like members 124a - 124h in their closed configuration.

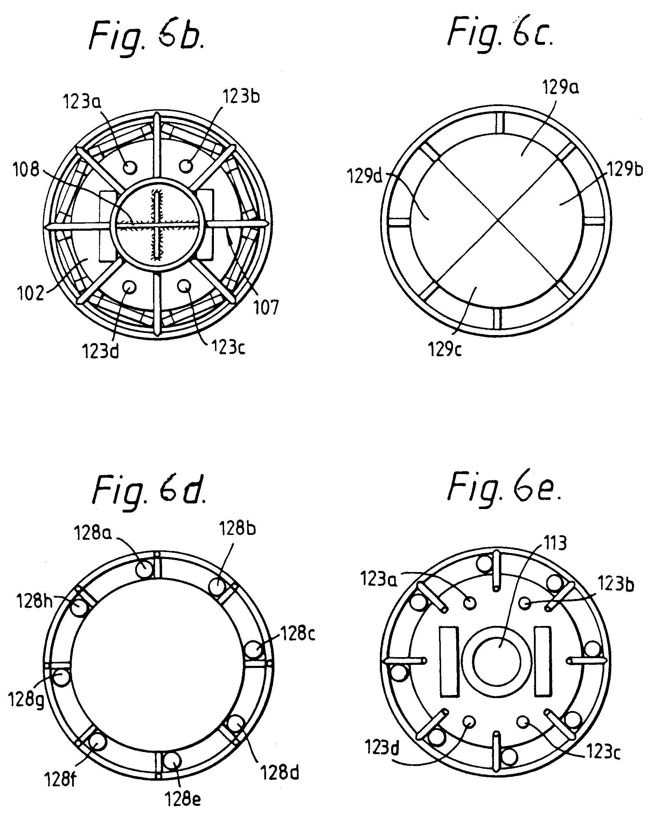

Referring now to Figure 6c, there is shown a plan view of the bottom of the vessel. The four "clamshell" doors 129a - 129d are shown closed.

Figure 6d is a section through the lower part of the vessel, along lines A-A of Figure 5. The stored energy accumulators 128a - 128h are attached to the side of the vessel as shown.

Figure 6e is a section through the upper part of the vessel, along lines B-B of Figure 5. The filling port 113, which may be sealed after the vessel is filled, is surrounded by the four one-way vents 123a -123d.

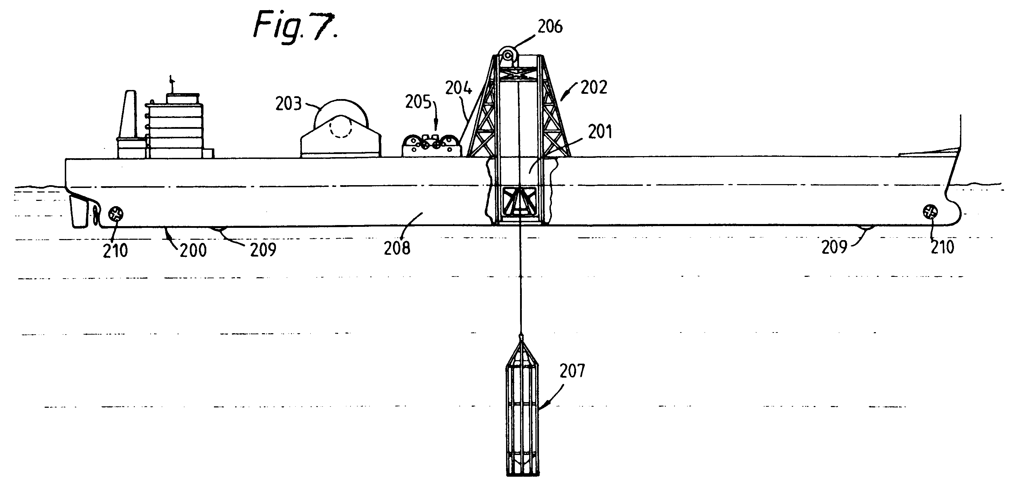

Referring now to Figure 7, there is shown a marine system for disposal of material on subaqueous ground. This comprises a ship, 200, the hull of which includes a moon-pool 201. Over the moon-pool is mounted a gantry 202. On the deck of the ship there is a rope store 203, from which the rope 204 passes through a traction device 205 which allows the rope to run freely and is also able to hold the rope stationary and wind it back in again. The rope 204 passes from the traction device 205, via a wheel 206 mounted on top of the gantry 202, to a vessel 207 which is of the type described above with reference to Figures 5 and 6. The rope has a design strength sufficient to support the weight of a container and its contents (e.g. a breaking strain of several thousand tonnes) and should be designed to be capable of withstanding considerable stretching forces. The vessel may be held in the moon-pool 201 to be filled with waste material contained in the hold 208 of the ship. The ship has sensors 209 (e.g. sonar transponders) to measure the water depth below the hull. The ship also has a dynamicpositioning system (not shown) in which satellite navigational aids are used to locate the ship accurately, and thrusters 210 are used to maintain the position of the ship over a selected site.

Referring now to Figure 8, a schematic alternative embodiment is illustrated which is generally similar in construction and mode of operation to that of Figures 5 and 6; accordingly, only those aspects of this embodiment which differ from those of Figures 5 and 6 will now be described. Four wing-like members 134 (two of which are visible in the drawing) are attached to vessel 131 via a hinged mechanism 135. Each of the four wing-like members 134 carries, at its lower end, an outwardly extending flange 138. One-way vents at the top of the containment body are illustrated diagrammatically at 133. The centre of gravity of the containment body 131 is indicated at 139. The attachment point for wing-like members 134 is above the level of the centre of gravity 139.

In Figures 9 and 10, a device generally similar to that of Figure 8 is shown, except that wing-like members 144 carry a plurality of baffle plates 150. These baffle plates may be of fixed orientation, or they may be arranged so as to be able to move from a feathered position to an opened position, providing a gentler deceleration than the wing-like members 134.

During descent of a filled vessel from the surface of the sea to a predetermined subaqueous location, typically to the sea bed, the vessel may initially be allowed to descend under "free fall" conditions while tethered to the surface ship through sling 108; the attitude of the vessel and its rate of descent being monitored by sensors (e.g. sonar transponder 110) and modified, where appropriate, by control devices such as motor pumps and water jets (not shown). With the embodiment of Figures 9 and 10, the rate of descent of the vessel under free fall conditions is reduced by virtue of the effect of baffles 150.

At a predetermined depth relative to the final destination of the vessel, the wing-like members (124, 134, 144) are extended outwardly as illustrated in Figures 6 a and 10 to act as water brakes. These significantly decelerate the descent of the vessel, without destabilising it. Deceleration of the downward movement of the vessel can be achieved by applying tension to the rope connected to lifting/lowering sling 8, but in order to give economic operation, without undue strain on the rope, the wings (124, 134, 144) can be used to provide initial decelerating forces and thereby limit the strain on the rope. The rope may be coiled in a rope store in such a way that it may be uncoiled freely, but held taut at any time. The rope should be sufficiently long so as to allow the vessel to reach the sea bed. Once the vessel has been slowed to a relatively low velocity by wings (124, 134, 144), the rope itself may be used to take the strain until the vessel reaches its predetermined location just above the sea bed. Water jets 109 (see Figure 5) are then operated and serve to blast a depression in the material of the sea bed thereby creating a hollow into which the material contained within the vessel may be deposited. Once the water jets have fulfilled this function, the doors 129a - 129d in the lower end 103 of the containment body are opened, and waste material stored within the containment body (101, 131) leaves the body and settles on the sea bed. The one-way vents (123, 133) permit ingress of sea water which displaces the waste material leaving the body via its lower doors.

After the waste material has been emptied from the vessel, a flocculating agent is advantageously released over the mass of deposited material preferably from a height of about 4.6m (15 feet) above the deposited mass. This assists in ensuring that the waste material is in a cohesive state, and further assists in settling particles derived from the sea bed itself which were dislodged by the water jets in preparation for deposition of the waste material. It would also be possible to treat the waste material chemically before or during the descent of the vessel.

After depositing the waste material, the vessel is raised to the surface via the lifting/lowering sling 108 (see Figure 5); during ascent to the surface, the doors at the lower end 103 of the containment body are kept open so that water is able to pass through the interior of the body via one-way vents such as 123a - 123d of Figure 6. This greatly decreases the vessel's resistance to movement, thus facilitating retrieval of the vessel by its mother ship. After retrieval, the vessel may be re-used.

In the embodiments described above, the means for controlling the wing-like members (124, 134, 144) and the baffles (150) are preferably arranged to ensure that all of the wings open exactly simultaneously and to exactly the same feathering angle and that the baffles do likewise; this maintains stability of the vessel during its descent.

The use of a vessel of the type shown in Figures 5 and 6 will now be illustrated by the following example:

### EXAMPLE

A vessel with a containment body of capacity 1000 m³ and weight on air of 177 tons is filled with waste material to a total weight of about 1530 tons. Allowing for hydrostatic displacement, the weight of the full vessel in water is about 370 tons. When the vessel is descending under "free fall" conditions, it reaches a terminal velocity of about 11 metres per second. When the eight wing-like members, which present a total area of about 158 m² (1700 square feet), are moved to the open position, the vessel is decelerated to a new terminal velocity of about 6 metres per second, at which speed the rope is used for final deceleration to standstill. After deposition of the waste material, the vessel is drawn back up to the surface, with the one-way vents 123a - 123d and clamshell doors 129a - 129d open, at a speed of about 10 ms⁻¹ (2000 feet per minute).

## Claims

1. A method of disposal of waste material on subaqueous ground substantially without said material coming into contact with the surrounding water, which comprises transporting said material to a location above a selected site for disposal, conveying said material in a vessel (21,131) to a level at, or close to, said subaqueous ground, and depositing said material from said vessel (21,131) onto said subaqueous ground, characterised in that said vessel (21,131) travels under free-fall conditions for a first period, and thereafter is decelerated during a second period as it approaches said level.

2. A method according to claim 1, wherein the depth of said subaqueous ground is calculated and wherein said first, free-fall period and said second, decelerating period are calculated as a function of said depth.

3. A method according to claim 1 or 2, wherein the duration of said first and second periods are calculated prior to the descent of said vessel.

4. A method according to claim 1 or 2, wherein the duration of said first and second periods are calculated during the descent of said vessel.

5. A method according to any preceding claim, wherein said vessel is held at said level at, or close to, said subaqueous ground by means of a rope, chain or similar attachment (8).

6. A method according to any preceding claim, wherein a hollow is formed in said subaqueous ground when said vessel is at said level and prior to depositing said material onto said subaqueous ground.

7. A method according to claim 6, wherein said hollow is formed by water jets (109) carried by the vessel.

8. A method according to any preceding claim, wherein said waste material is subjected to processing.

9. A method according to claim 8, wherein said processing occurs prior to the descent of said material to said level.

10. A method according to claim 8, wherein said processing occurs during the descent of said material to said level.

11. A method according to claim 8, wherein said processing occurs after the deposition of said material onto said subaqueous ground.

12. A method according to any of claims 8 to 11, wherein said processing is a chemical treatment.

13. A method according to claim 12, wherein said chemical treatment comprises flocculation and/or coagulation.

14. A method according to any of claims 8, 9 or 10, wherein chemical reagents or additives are injected into said material through one or more nozzles.

15. A method according to claim 11, wherein chemical reagents are released over said deposited material.

16. A method according to any preceding claim, wherein vent apertures (123,133) provided with non-return valves are accommodated in said vessel (21,131), which, in use, permit water to enter said vessel but prevent egress of said material therefrom.

17. A method according to claim 16, wherein said vent apertures (123,133) are opened when said material is being deposited on said subaqueous ground.

18. A method according to claim 16 or 17, wherein after deposition of said material onto said subaqueous ground, the vessel (21,131) is returned to the surface, and wherein said vent apertures (123,133) remain open during its return to the surface.

19. A vessel (21,131) for transporting material from a first location at the surface of a body of water to a second location at a predetermined subaqueous level, for example at the sea bed, which vessel comprises a generally cylindrical body (101) comprising a containment area and having an opening (113) at its upper end for receiving material which is to be transported by the vessel, and having at its lower end means (129) for permitting egress of material held within the containment area once said vessel has reached its predetermined second location;
characterised in that the vessel is provided, at a position intermediate its upper end and its centre of mass (139), with at least two wing-like members (124,134,144) located on the exterior surface of the vessel at diametrally opposed positions; and is provided with means (125) for pivoting said wing-like members between a first position in which they lie substantially flat against the exterior of the vessel and a second position in which they extend outwardly from the body of the vessel so as to present an increased surface area to the surrounding water and to provide thereby a decelerating effect on the motion of the vessel when the vessel is moving downwardly within the body of water.

20. A vessel as claimed in claim 19, wherein said wing-like members (124,134,144) are moved by means of hydraulic or pneumatic rams (126) relative to the body (101) of said vessel.

21. A vessel as claimed in claim 19 or 20, wherein baffles are provided on the outer surface of said vessel.

22. A vessel as claimed in any of claims 19, 20 or 21 wherein baffles (150) are provided on the outer surface of the wing-like members (144).

23. A vessel as claimed in claim 21 or 22, wherein said baffles (150) are fixed.

24. A vessel as claimed in claim 21 or 22, wherein said vessel further includes means permitting active control of the orientation of the said baffles (150).

25. A vessel as claimed in any of claims 19 to 24, which further comprises a sonar transponder (110).

26. A vessel as claimed in any of claims 19 to 25, which further comprises means for calculating the time at which said wing-like members (124,134,144) are to be moved from their first position to their second position during descent of the vessel.

27. A vessel as claimed in any of claims 19 to 26, which further comprises a velocity detector.

28. A vessel as claimed in any of claims 19 to 27, which further comprises water jets (109) affixed to said vessel.

29. A vessel as claimed in any of claims 19 to 28, which further comprises stored energy accumulators (128).

30. A vessel as claimed in any of claims 19 to 29, wherein the generally cylindrical body (101) of said vessel is disposed within an open frame (104).

31. A vessel as claimed in any of claims 19 to 30, wherein said egress of material from within the said containment area is accomplished by means of a hinged door (129) at the base of said vessel.

32. A vessel as claimed in claim 31, wherein said door (129) is opened and closed by hydraulic or pneumatic rams (105).

33. A vessel as claimed in any of claims 19 to 32, wherein the containment area of said vessel has its internal surface provided with a non-stick coating.

## Patentansprüche

1. Verfahren zur Entsorgung von Abfallmaterial auf dem Meeresboden, im wesentlichen, ohne daß das Material mit dem umgebenden Wasser in Kontakt gerät, das umfaßt: ein Transportieren des Materials zu einer Stelle oberhalb des ausgewählten Entsorgungsplatzes, ein Befördern des Materials in einem Behälter (21, 131) auf Höhe des Meeresbodens oder in dessen Nähe und ein Entsorgen des Materials aus dem Behälter (21, 131) auf den Meeresboden, dadurch gekennzeichnet, daß sich der Behälter (21, 131) während eines ersten Zeitraums unter Freifallbedingungen bewegt und danach während eines zweiten Zeitraums gebremst wird, wenn er sich dieser Tiefe nähert.

2. Verfahren nach Anspruch 1, wobei die Tiefe des Meeresbodens berechnet wird und der erste Freifallzeitraum und der zweite Bremszeitraum als Funktion der Tiefe berechnet werden.

3. Verfahren nach Anspruch 1 oder 2, wobei die Länge des ersten und des zweiten Zeitraums vor dem Absenken des Behälters berechnet wird.

4. Verfahren nach Anspruch 1 oder 2, wobei die Länge des ersten und des zweiten Zeitraums während des Absenkens des Behälters berechnet wird.

5. Verfahren nach einem vorhergehenden Anspruch, wobei der Behälter auf Höhe des Meeresbodens oder in dessen Nähe mit einem Seil, einer Kette oder einer ähnlichen Halterung (8) festgehalten wird.

6. Verfahren nach einem vorhergehenden Anspruch, wobei eine Vertiefung im Meeresboden erzeugt wird, wenn der Behälter diese Tiefe erreicht hat und bevor das Material auf den Meeresboden entsorgt wird.

7. Verfahren nach Anspruch 6, wobei die Vertiefung mit Wasserstrahldüsen (109) erzeugt wird, die an dem Behälter befestigt sind.

8. Verfahren nach einem vorhergehenden Anspruch, wobei das Abfallmaterial verarbeitet wird.

9. Verfahren nach Anspruch 8, wobei das Verarbeiten vor dem Absenken des Materials in diese Tiefe erfolgt.

10. Verfahren nach Anspruch 8, wobei das Verarbeiten während des Absenkens des Materials in diese Tiefe erfolgt.

11. Verfahren nach Anspruch 8, wobei das Verarbeiten nach der Entsorgung des Materials auf den Meeresboden erfolgt.

12. Verfahren nach einem der Ansprüche 8 bis 11, wobei das Verarbeiten eine chemische Behandlung ist.

13. Verfahren nach Anspruch 12, wobei die chemische Behandlung Ausflockung und/oder Koagulierung umfaßt.

14. Verfahren nach einem der Ansprüche 8, 9 oder 10, wobei chemische Reagenzien oder Additive in das Material durch eine oder mehrere Düsen eingespritzt werden.

15. Verfahren nach Anspruch 11, wobei chemische Reagenzien über dem entsorgten Material freigesetzt werden.

16. Verfahren nach einem vorhergehenden Anspruch, wobei mit Rückschlagventilen versehene Entlüftungsöffnungen (123, 133) in dem Behälter (21, 131) angebracht sind, die bei Gebrauch Wasser in den Behälter hineinlassen, jedoch den Austritt des Materials daraus verhindern.

17. Verfahren nach Anspruch 16, wobei die Entlüftungsöffnungen (123, 133) geöffnet werden, wenn das Material auf den Meeresboden entsorgt wird.

18. Verfahren nach Anspruch 16 oder 17, wobei der Behälter (21, 131) nach der Entsorgung des Materials auf den Meeresboden zur Oberfläche zurückgeholt wird und die Entlüftungsöffnungen (123, 133) bei seiner Rückkehr zur Oberfläche offen bleiben.

19. Behälter (21, 131) zum Transport von Material von einer ersten Stelle an der Oberfläche eines Wasserkörpers zu einer zweiten, unter Wasser befindlichen Stelle vorgegebener Tiefe, z.B. einem Meeresbett, wobei der Behälter einen gewöhnlich zylindrischen Körper (101) umfaßt, der einen Sicherheitsbehälterbereich umfaßt und eine Öffnung (113) an seinem oberen Ende für die Aufnahme von Material hat, das mit dem Behälter transportiert werden soll und Vorrichtungen (129) an seinem unteren Ende hat, mit denen das in dem Sicherheitsbehälterbereich gehaltene Material abgelassen werden kann, wenn der Behälter die vorgegebene zweite Stelle erreicht hat;
dadurch gekennzeichnet, daß der Behälter an einer Stelle zwischen seinem oberen Ende und seinem Massenschwerpunkt (139) mit mindestens zwei flügelähnlichen Elementen (124, 134, 144) ausgerüstet ist, die sich auf der äußeren Oberfläche des Behälters gegenüber liegen; und mit Vorrichtungen (125) ausgestattet ist, mit der sich die flügelähnlichen Elemente schwenken lassen zwischen einer ersten Stellung, in der sie im wesentlichen eng an der Behälteraußenwand anliegen, und einer zweiten Stellung, in der sie vom Körper des Behälters nach außen geklappt sind, um dem umgebenden Wasser eine größere Oberfläche zu bieten und dadurch eine bremsende Wirkung auf die Bewegung des Behälters auszuüben, wenn sich der Behälter in dem Wasserkörper nach unten bewegt.

20. Behälter nach Anspruch 19, wobei die flügelähnlichen Elemente (124, 134, 144) mit hydraulischen oder pneumatischen Kolben (126) relativ zum Behälterkörper (101) bewegt werden.

21. Behälter nach Anspruch 19 oder 20, wobei die Außenfläche des Behälters mit Ablenkplatten versehen ist.

22. Behälter nach einem der Ansprüche 19, 20 oder 21, wobei die Außenfläche der flügelähnlichen Elemente (144) mit Ablenkplatten (150) versehen ist.

23. Behälter nach Anspruch 21 oder 22, wobei die Ablenkplatten (150) feststehend sind.

24. Behälter nach Anspruch 21 oder 22, wobei der Behälter ferner Vorrichtungen umfaßt, mit denen sich die Ausrichtung der Ablenkplatten (150) aktiv steuern läßt.

25. Behälter nach einem der Ansprüche 19 bis 24, der ferner einen Sonartransponder (110) umfaßt.

26. Behälter nach einem der Ansprüche 19 bis 25, der ferner Vorrichtungen umfaßt, mit denen man berechnet, wann die flügelähnlichen Strukturen (124, 134, 144) von ihrer ersten Stellung in ihre zweite Stellung beim Absenken des Behälters bewegt werden sollen.

27. Behälter nach einem der Ansprüche 19 bis 26, der ferner ein Geschwindigkeitsmeßgerät umfaßt.

28. Behälter nach einem der Ansprüche 19 bis 27, der ferner am Behälter befestigte Wasserstrahldüsen (109) umfaßt.

29. Behälter nach einem der Ansprüche 19 bis 28, der ferner Energiespeicherakkumulatoren (128) umfaßt.

30. Behälter nach einem der Ansprüche 19 bis 29, wobei der gewöhnlich zylindrische Körper (101) des Behälters in einem offenen Rahmen (104) installiert ist.

31. Behälter nach einem der Ansprüche 19 bis 30, wobei der Materialaustritt aus dem Sicherheitsbehälterbereich mit einer schwenkbaren Luke (129) am Boden des Behälters bewerkstelligt wird.

32. Behälter nach Anspruch 31, wobei die Luke (129) mittels hydraulischen oder pneumatischen Kolben (105) geöffnet und geschlossen wird.

33. Behälter nach einem der Ansprüche 19 bis 32, wobei die Innenoberfläche des Sicherheitsbehälterbereichs des Behälters mit einer Antihaftbeschichtung ausgestattet ist.

## Revendications

1. Procédé pour le déversement de matières de rebut sur un fond subaquatique pratiquement sans que la matière vienne en contact avec l'eau environnante, ce procédé consistant à transporter ladite matière jusqu'à un endroit situé au-dessus d'un site choisi pour un dépôt de déchets, à acheminer ladite matière dans un récipient (21, 131) jusqu'au niveau dudit fond subaquatique, ou au voisinage de ce niveau, et à déposer ladite matière depuis ledit récipient (21, 131) jusque sur ledit fond subaquatique, caractérisé en ce que ledit récipient (21,131) se déplace dans des conditions de chute libre avant une première période, et est décéléré ensuite pendant une seconde période à mesure qu'il se rapproche dudit niveau.

2. Procédé selon la revendication 1, dans lequel on calcule la profondeur dudit fond subaquatique et dans lequel on calcule ladite première période de chute libre et ladite seconde période de décélération en fonction de ladite profondeur.

3. Procédé selon la revendication 1 ou 2, dans lequel on calcule la durée desdites première et seconde périodes pendant la descente dudit récipient.

4. Procédé selon la revendication 1 ou 2, dans lequel on calcule la durée desdites première et seconde périodes pendant la descente dudit récipient.

5. Procédé selon n'importe quelle revendication précédente, dans lequel on maintient ledit récipient audit niveau du fond subaquatique, ou au voisinage de ce niveau, au moyen d'une corde, d'une chai'ne ou d'un lien similaire (8).

6. Procédé selon n'importe quelle revendication précédente, dans lequel on forme une cavité dans ledit fond subaquatique quand ledit récipient se trouve audit niveau et avant de déposer ladite matière sur ledit fond subaquatique.

7. Procédé selon la revendication 6, dans lequel on forme ladite cavité à l'aide de tuyères à jets d'eau (109) supportées par le récipient.

8. Procédé selon n'importe quelle revendication précédente, dans lequel on soumet la matière de rebut à un traitement.

9. Procédé selon la revendication 8, dans lequel on effectue ledit traitement avant la descente de ladite matière jusqu'audit niveau.

10. Procédé selon la revendication 8, dans lequel on effectue ledit traitement pendant la descente de ladite matière jusqu'audit niveau.

11. Procédé selon la revendication 8, dans lequel on effectue ledit traitement après le dépôt de ladite matière sur ledit fond subaquatique.

12. Procédé selon l'une quelconque des revendications 8 à 11, dans lequel ledit traitement est un traitement chimique.

13. Procédé selon la revendication 12, dans lequel ledit traitement chimique comprend une floculation et/ou une coagulation.

14. Procédé selon l'une quelconque des revendications 8, 9 ou 10, dans lequel on injecte des réactifs ou des additifs chimiques dans ladite matière par l'intermédiaire d'une ou plusieurs buses.

15. Procédé selon la revendication 11, dans lequel on libère des réactifs chimiques sur ladite matière déposée.

16. Procédé selon n'importe quelle revendication précédente, dans lequel on forme dans ledit récipient (21, 131) des ouvertures d'aération (123, 133) munies de clapets de non-retour qui, pendant l'utilisation, permettent à l'eau de pénétrer dans ledit récipient mais empêchent ladite matière de sortir de ce dernier.

17. Procédé selon la revendication 16, dans lequel on ouvre lesdites ouvertures (123, 133) quand ladite matière est en cours de dépôt sur ledit fond subaquatique.

18. Procédé selon la revendication 16 ou 17, dans lequel, après le dépôt de ladite matière sur ledit fond subaquatique, on fait revenir le récipient (21, 131) à la surface et dans lequel lesdites ouvertures (123, 133) restent ouvertes pendant son retour jusqu'à la surface.

19. Récipient (21, 131) pour transporter une matière depuis un premier endroit situé à la surface d'un plan d'eau jusqu'à un second endroit situé à un niveau subaquatique prédéterminé, par exemple au fond de la mer, ce récipient comprenant un corps (101), globalement cylindrique, comprenant une zone de confinement et comportant, à son extrémité supérieure, une ouverture (113) servant à recevoir une matière qui doit être transportée par le récipient et, à son extrémité inférieure, un moyen (129) permettant la sortie de la matière contenue dans la zone de confinement une fois que ledit récipient a atteint son second endroit prédéterminé;
caractérisé en ce que le récipient est muni, à un endroit situé entre son extrémité supérieure et son centre de gravité, (139) d'au moins deux éléments (124, 134, 144), analogues à des ailes, situés sur la surface extérieure du récipient à des endroits diamétralement opposés; et est pourvu d'un moyen (125) servant à faire pivoter lesdits éléments analogues à des ailes entre une première position dans laquelle ils se trouvent pratiquement à plat contre l'extérieur du récipient et une seconde position dans laquelle ils s'étendent vers l'extérieur, depuis le corps du récipient, de manière à présenter une superficie plus grande à l'eau environnante et à assurer ainsi un effet de décélération sur le mouvement du récipient quand ce récipient descend dans le plan d'eau.

20. Récipient selon la revendication 19, dans lequel lesdits éléments (124, 134, 144) analogues à des ailes sont déplacés au moyen de vérins hydrauliques ou pneumatiques (126) par rapport au corps (101) du récipient.

21. Récipient selon la revendication 19 ou 20, dans lequel les volets sont présents sur la surface extérieure dudit récipient.

22. Récipient selon l'une quelconque des revendications 19, 20 ou 21, dans lequel des volets (150) sont présents sur la surface extérieure des éléments (144) analogues à des ailes.

23. Récipient selon la revendication 21 ou 22, dans lequel lesdits volets (150) sont fixes.

24. Récipient selon la revendication 21 ou 22, dans lequel ledit récipient comprend, en outre, des moyens permettant une commande active de l'orientation desdites volets (150).

25. Récipient selon l'une quelconque des revendications 19 à 24, comprenant, en outre, un transpondeur (110) à ultrasons.

26. Récipient selon l'une quelconque des revendications 19 à 24, comprenant, en outre, un moyen pour calculer le moment où les éléments (124, 134, 144), analogues à des ailes, doivent être déplacés depuis leur première position jusqu'à leur seconde position pendant la descente du récipient.

27. Récipient selon l'une quelconque des revendications 19 à 26, comprenant, en outre, un détecteur de vitesse.

28. Récipient selon l'une quelconque des revendications 19 à 27, comprenant, en outre, des buses (109) émettant des jets d'eau et fixées audit récipient.

29. Récipient selon l'une quelconque des revendications 19 à 28, comprenant, en outre, des accumulateurs (128) d'énergie stockée.

30. Récipient selon l'une quelconque des revendications 19 à 29, dans lequel le corps (101) globalement cylindrique dudit récipient est disposé dans un bâti ouvert (104).

31. Récipient selon l'une quelconque des revendications 19 à 30, dans lequel ladite sortie de matière depuis l'intérieur de ladite zone de confinement est effectuée au moyen d'une porte articulée (129) située à la base dudit récipient.

32. Récipient selon la revendication 31, dans lequel ladite porte (129) est ouverte et fermée à l'aide de vérins hydrauliques ou pneumatiques (105).

33. Récipient selon l'une quelconque des revendications 19 à 32, dans lequel la zone de confinement dudit récipient est munie, sur sa surface intérieure, d'un revêtement anti-adhérent.
